# EUROPEAN PATENT SPECIFICATION

(11) **EP 1 732 195 B1**
(45) Date of publication and mention of the grant of the patent: **05.06.2013**
(21) Application number: 05720350.7
(22) Date of filing: 09.03.2005
(51) Int. Cl.: H02K 29/06, H02K 5/10

(54) **Brushless motor**
Bürstenloser Motor
Moteur sans collecteur

(30) Priority: 11.03.2004 JP 2004069689
(43) Date of publication of application: 13.12.2006
(73) Proprietor: Valeo Thermal Systems Japan Corporation, Konan-machi, Osato-gun Saitama 3600193 (JP)
(72) Inventor: UMEGAKI, Fuhito, c/o VALEO THERMAL SYSTEMS JAPAN CORPORATION, Osato-gun Saitama 3600193 (JP); TAKAHASHI, O., c/o VALEO THERMAL SYSTEMS JAPAN CORPORATION, Osata-gun Saitama 3600193 (JP)
(74) Representative: Von Rohr
(86) International application number: PCT/JP2005/004078
(87) International publication number: WO 2005/088810

(56) References cited:
- DE-U1-202007 001 507
- JP-A- 6 205 561
- JP-A- 2000 295 810
- JP-A- 2000 350 430
- JP-A- 2000 350 430
- JP-A- 2002 252 958
- JP-A- 2003 032 988
- JP-A- 2003 339 135
- US-A- 6 137 198

## Description

### Technical Field

The present invention relates to a brushless motor according to the preamble of claim 1, more particularly, to a brushless motor that realizes improved workability of a connection part between an exciting coil wound around a stator and a circuit board disposed inside a casing, improved waterproofing in the connection part, and so on.

### Background Art

Conventionally, as a brushless motor of this type, there has been generally known, for example, a brushless motor in which, on an upper surface of a casing housing a circuit board, a rotor is rotatably supported and a stator having an exciting coil wound therearound is fixed (see, for example, Patent document 1). Patent document 1: Japanese Patent Application Laid-open No. 2001-69741

In such a brushless motor, the exciting coil and an electric circuit on the circuit board need to be electrically connected. In the above-described conventional example, the electrical connection between the exciting coil wound around the stator and the circuit board is realized in such a manner that one end of a linear, stiff conductor as a terminal pin is soldered to the exciting coil and the other end is joined to a relatively wide conductive member called a busbar provided on the circuit board.

In the brushless motor as described above, the terminal pin is provided to penetrate the casing, and considering that the brushless motor is sometimes used for a vehicle blower or the like, a measure has to be taken to fully ensure waterproofing of this penetration portion. Further, in the above-described conventional example, the soldering of the exciting coil and the terminal pin is performed along with the waterproofing process of the exciting coil. From the viewpoint of providing a low-price brushless motor, there is a demand for higher workability of a portion requiring such a water proofing process.

JP 2000 350 430 A relates to a brushless motor comprising a casing, a stator with an exciting coil and a circuit board. The circuit board and the exciting coil are electrically connected to each other via a terminal bar made of a conductive member. A portion of the terminal bar is buried in a sealing cap. The sealing cap is designed as a hollow part with rectangular cross section, wherein the cap comprises a flange at one end.

### Disclosure of the Invention

### Problems that the Invention shall Solve

The present invention was made in view of the above circumstances, and an object thereof is to provide a brushless motor that realizes improved workability of electrical connection between an exciting coil wound around a stator and a circuit board disposed in a casing and reliably ensures waterproofing with a simple structure.

### Means for Solving the Problems

The above object is achieved by a brushless motor according to the characterizing part of claim 1.

A brushless motor according to an embodiment of the present invention includes: a casing that houses and holds a circuit board and supports a rotor in a rotatable manner,
wherein a stator around which an exciting coil is wound is disposed inside the rotor, and the exciting coil is connected to the circuit board via a terminal bar provided in the casing, the brushless motor further comprising a waterproof case having a portion in a hollow form, and
wherein one end of the terminal bar connected to the exciting coil is positioned in the portion in the hollow form of the waterproof case, while the other end of the terminal bar protrudes from the waterproof case, and an adhesive is filled in a hollow portion of the portion in the hollow form so as to bury the terminal bar, and
wherein the waterproof case is disposed on an upper surface side of the casing, with the portion in the hollow form facing the rotor.

### Advantage of the Invention

According to the preset invention, the terminal bar used for electrically connecting the exciting coil and the circuit board is buried in the waterproof case having the portion in the hollow form, the waterproof case is fitted in the casing of the brushless motor or is disposed on the casing by integral molding, and the adhesive is filled in the hollow portion. This brings about an effect that, with a relatively simple structure, an insulating process of the connection portion between the exciting coil and the terminal bar can be facilitated and water-tightness of a portion of the terminal bar passing through the casing is reliably ensured.

### Brief Description of the Drawings

- Fig. 1: is a vertical cross-sectional view showing a first structure example of a brushless motor of an embodiment of the present invention;
- Fig. 2: is a plane view of the brushless motor shown in Fig. 1 before a blower is attached thereto;
- Fig. 3: is a side view of the brushless motor shown in Fig. 1 before the blower is attached thereto;
- Fig. 4: is a bottom view of the brushless motor shown in Fig. 1;
- Fig. 5: is an exploded vertical cross-sectional view showing an essential part to explain the assembly procedure of a casing;
- Fig. 6: is an enlarged vertical cross-sectional view of the vicinity of a waterproof case in the first structure example shown in Fig. 1;

**Explanation of Reference Symbols**
- 1: Casing
- 2: Stator
- 3: Rotor
- 21: Motor cover
- 21b: First ring-shaped peripheral wall
- 22: Board cover
- 22b: Second ring-shaped peripheral wall
- 24: Terminal bar
- 25: Waterproof case
- 28: Board-side connector
- 29: Cover-side connector
- 30: External connector connection part

### Description of Specific Embodiment

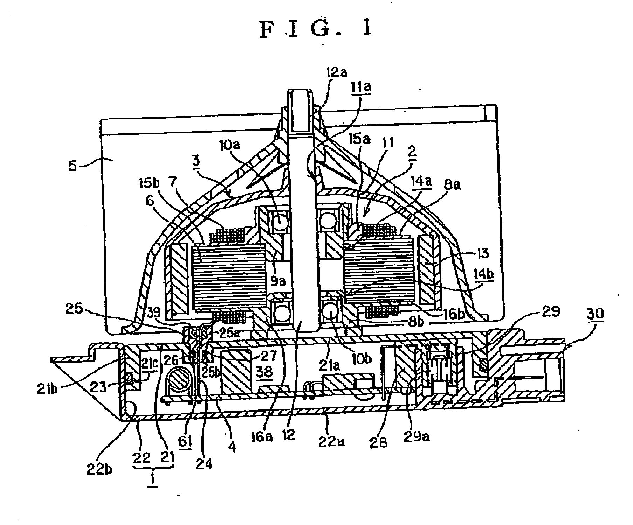

Hereinafter, an embodiment of the present invention will be described with reference to Fig. 1 to Fig. 6.

It should be noted that members, dispositions, and so on described below are not intended to restrict the present invention, and various modifications can be made without departing from the spirit of the present invention.

First, a first structure example of a brushless motor of the embodiment of the present invention will be described with reference to Fig. 1 to Fig. 6.

The brushless motor of the embodiment of the present invention is mainly composed of a stator 2 whose base portion is fixed to a casing 1, a rotor 3 rotatably provided on the stator 2, and a circuit board 4 controlling current supply to an exciting coil 7 wound around the stator 2 (see Fig. 1). The brushless motor having such a structure is used for rotary-driving, for example, a blower 5 in a vehicle air-conditioner, and the blower 5 is fixed to a tip 12a of a rotary shaft 12 (see Fig. 1).

The stator 2 in the embodiment of the present invention has a laminated core 6, the exciting coil 7 wound around the laminated core 6, an upper insulation cover 8a, and a lower insulation cover/bearing holder 8b, and is disposed inside the rotor 3.

The upper insulation cover 8a has: a portion 15a in a hollow cylindrical shape; and a ring-shaped flange 15b provided at an appropriate position on an outer peripheral surface of the portion 15a. An upper bearing holder 9a is press-fitted in the portion 15a in the hollow cylindrical shape. The upper bearing holder 9a holds an upper bearing 10a and has an upper press-fitted portion 14a in a columnar shape press-fitted to an upper portion (a rotor 3 side in Fig. 1) of the laminated core 6.

The lower insulation cover/bearing holder 8b is disposed on a lower side (a casing 1 side in Fig. 1) of the laminated core 6 to function as an insulation cover similarly to the aforesaid upper insulation cover 8a, and also houses/holds a lower bearing 10b. Specifically, similarly to the aforesaid upper insulation cover 8a, the lower insulation cover/bearing holder 8b has: a portion 16a in a substantially hollow cylindrical shape in which the lower bearing 10b is disposed; and a ring-shaped flange 16b formed at an appropriate position on an outer peripheral surface of the portion 16a. Further, at an end of the portion 16a on an opposite side of the casing 1, a lower press-fitted portion 14b press-fitted in a lower portion of the laminated core 6 is provided.

In the laminated core 6, the upper press-fitted portion 14a of the upper bearing holder 9a is press-fitted in the upper center portion thereof and the lower press-fitted portion 14b of the lower insulation cover/bearing holder 8b is press-fitted to the lower center portion thereof, so that the laminated core 6 is sandwiched and supported by the upper insulation cover 8a and the upper bearing holder 9a and the lower insulation cover/bearing holder 8b from above and under (see Fig. 1).

In the lower insulation cover/bearing holder 8b, an end portion opposite the end portion where the lower press-fitted portion 14b is formed is fixed to the motor cover 21 being a first case member constituting the casing 1. Center portions of the upper bearing holder 9a and the lower insulation cover/bearing holder 8b are hollow, and the rotary shaft 12 is inserted through the hollow portions, so that the rotary shaft 12 is rotatably supported on the casing 1 by the upper bearing 10a and the lower bearing 10b (see Fig. 1).

The rotor 3 has a yoke 11 substantially in a bowl shape. An open surface of the yoke 11 is positioned on a casing 1 side and a closed surface thereof forms an upper surface. The rotary shaft 12 is inserted through a through hole 11a formed in a center portion of the closed surface, so that the rotor 3 is fixed to the shaft 12 and held on the casing 1.

On an inner peripheral surface of the yoke 11, a plurality of magnets 13 are fixedly arranged in a circumferential direction at appropriate intervals and face a peripheral surface of the laminated core 6 via an appropriate interval (see Fig. 1).

A casing 1 is composed of a motor cover 21 and a board cover 22, and in particular, unlike a conventional casing, the casing 1 in the embodiment of the present invention does not have a through hole or the like for ventilation between the inside and the outside, and thus is formed as a hermetic vessel.

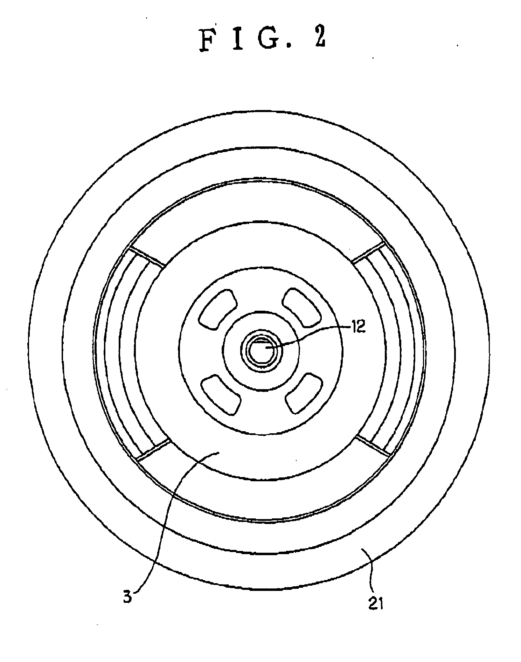

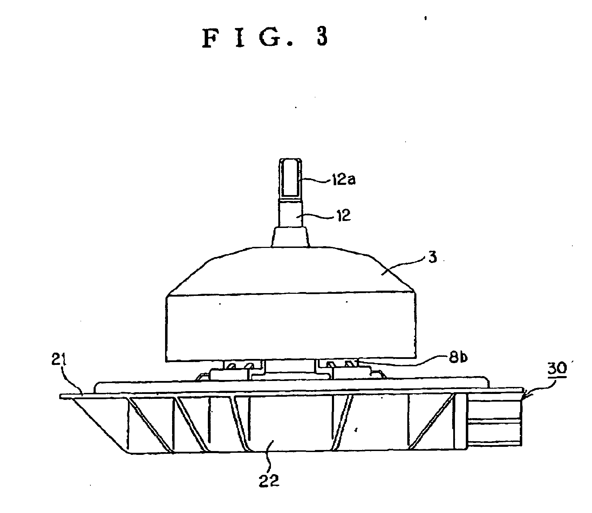

The motor cover 21 as a first case member is made of, for example, an aluminum member, and in a plane view, an outer appearance of the whole motor cover 21 is in a substantially disk shape (see Fig. 2). The motor cover 21 has a first ring-shaped peripheral wall 21b provided upright on a peripheral edge of a motor cover base portion 21a in a substantially disk shape (see Fig. 1). On an upper surface side of the motor cover 21, the rotor 3 is rotatably supported as described above (see Fig. 1 and Fig. 3).

In an appropriate position of an outer peripheral surface of the first ring-shaped peripheral wall 21b, a ring-shaped groove 21c is formed in a recessed manner, and an O-ring 23 is fitted in the ring-shaped groove 21c, so that the O-ring 23 is fitted around the first ring-shaped peripheral wall 21 b.

Further, a not-shown portion of a circuit board 4 is screw-fixed to a rear surface side of the motor cover 21, that is, a side opposite the side on which the rotor 3 is rotatably supported.

A circuit board 4 is supplied with power and driving signals from an external part via a board-side connector 28 attached to the circuit board 4, a later-described cover-side connector 29 provided on the board cover 22, and an external connector connection part 30, thereby constituting an electronic circuit for controlling current supply to an exciting coil 7.

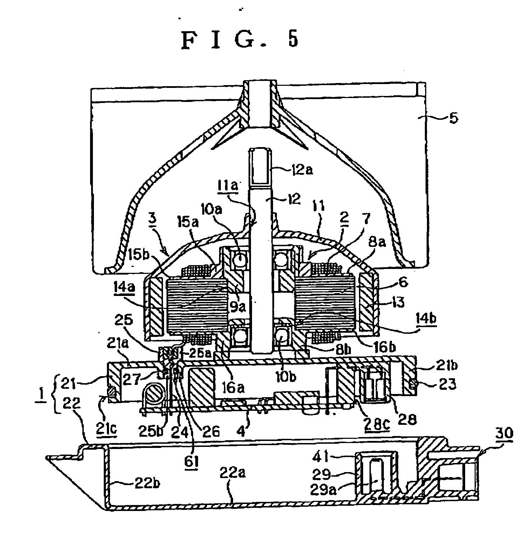

The board-side connector 28 is attached to the vicinity of an edge of the circuit board 4, with part thereof protruding from the circuit board 4 (see Fig. 1 and Fig. 5), and is fitted to the later-described cover-side connector 29 of the board cover 22.

The circuit board 4 and the exciting coil 7 are electrically connected to each other via a terminal bar 24 made of a conductive member. Specifically, in the embodiment of the present invention, one end of the terminal bar 24 is formed in a substantially U-shape so as to enable connection to the exciting coil 7, and a portion right under the U-shaped end is buried in a waterproof case 25 (see Fig. 1).

The waterproof case 25 in the embodiment of the present invention is in a substantially columnar shape as a whole and is composed of a large-diameter portion 25a and a small-diameter portion 25b. The large-diameter portion 25a is in a hollow bottomed-cylindrical shape. The U-shaped end of the terminal bar 24 is positioned in the large-diameter portion 25a, a substantially linear portion extending from the U-shaped end of the terminal bar 24 is partly buried in an axial direction in the small-diameter portion 25b, and the other portion of the terminal bar 24 protrudes from the small-diameter portion 25b (see Fig. 1).

At an appropriate position of the motor cover base portion 21 a of the motor cover 21, a hollow cylindrical fitting portion 26 is formed to protrude toward a rear surface side of the motor cover 21, and the small-diameter portion 25b of the waterproof case 25 is inserted in the cylindrical fitting portion 26. In an outer peripheral surface of the small-diameter portion 25b, a waterproof case ring-shaped groove 61 is formed in a recessed manner, and an O-ring 27 is fitted in the waterproof case ring-shaped groove 61.

In a state where the waterproof case 25 is inserted in a cylindrical fitting portion 26, an end of the exciting coil 7 is welded or soldered to the U-shaped end of the terminal bar 24, thereafter, the hollow portion of the large-diameter portion 25a is filled with an adhesive 39, and the other end of the terminal bar 24 is soldered to the circuit board 4 (see Fig. 1).

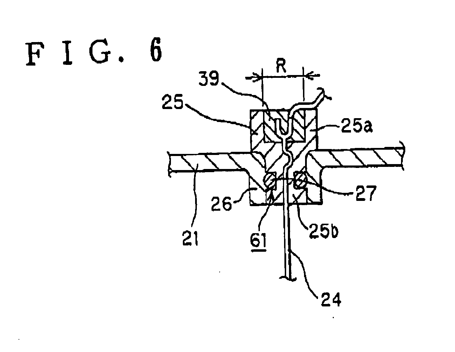

Here, the end of the terminal bar 24 and the end of the exciting coil 7 are welded or soldered in a state where the terminal bar 24 is buried in the waterproof case 25 as described above, in other words, in a state where the U-shaped end of the terminal bar 24 is positioned inside the large-diameter portion 25a. Therefore, a size of an opening of the large-diameter portion 25a, specifically, in this structure example, an inside diameter R (see Fig. 6) is set large enough to allow a tip of a welding electrode or a soldering tool to enter the inside of the large-diameter portion 25a so that a welding or soldering work between the end of the terminal bar 24 and the end of the exciting coil 7 can be performed.

Incidentally, insert molding is not restrictive as a method of disposing the terminal bar 24 in the smaller-diameter portion 25b of the waterproof case 25, but before or after being welded or soldered to the exciting coil 7, the terminal bar 24 may be inserted as a separate component in the smaller-diameter portion 25b and thereafter fixed to the waterproof case 25 by filling an adhesive in the large-diameter portion 25a.

Another possible structure to ensure water-tightness between the cylindrical fitting portion 26 and the small-diameter portion 25b is to apply a waterproof adhesive therebetween, instead of attaching an O-ring 27 around the small-diameter portion 25b.

Further, the end of the exciting coil 7 to be welded or soldered to the terminal bar 24 is led in from an upper side of the waterproof case 25, that is, the opening side of the large-diameter portion 25a (see Fig. 1), but the end portion of the exciting coil 7 need not be thus led in from the upper side of the waterproof case 25, and may be led in from a side surface of the waterproof case 25, for example, a side of the large-diameter portion 25a.

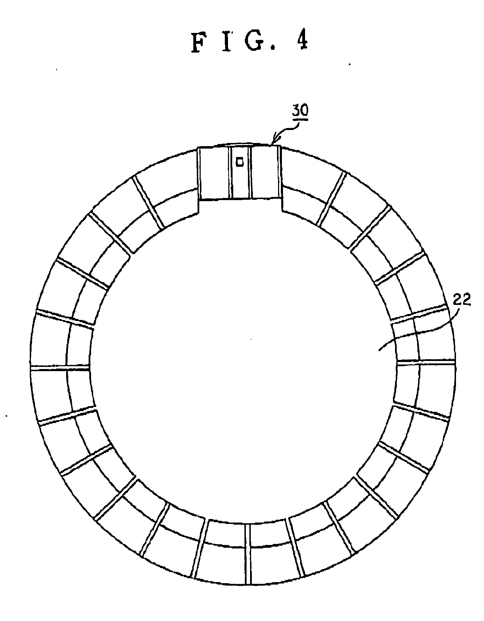

The board cover 22 as a second case member is made of, for example, a resin member, and similarly to the motor cover 21, it has a substantially disk-shaped outer appearance as a whole in a bottom view (see Fig. 1 and Fig. 4), and has a second ring-shaped peripheral wall 22b provided upright on a peripheral edge of a board cover base portion 22a (see Fig. 1). An inside diameter of the second ring-shaped peripheral wall 22b is substantially equal to an outside diameter of the aforesaid first ring-shaped peripheral wall 21b of the motor cover 21 (see Fig. 1).

Therefore, the motor cover 21 is fitted to the board cover 22, with an outer peripheral portion of the first ring-shaped peripheral wall 21b thereof being joined to an inner peripheral surface of the second ring-shaped peripheral wall 22b of the board cover 22 (see Fig. 1). Between the motor cover 21 and the board cover 22, a housing space 38 for housing and holding the aforesaid circuit board 4 is formed.

The cover-side connector 29 which is fitted to the aforesaid board-side connector 28 attached to the circuit board 4 when the motor cover 21 is fitted to the board cover 22 is integrally formed on the board cover base portion 22a of the board cover 22 in the embodiment of the present invention. The position of the cover-side connector 29 is set in advance so that the board-side connector 28 and the cover-side connector 29 are fitted to each other when the motor cover 21 is fitted to the board cover 22. A connector terminal 29a of the cover-side connector 29 is buried when the board cover 22 of the embodiment of the present invention is manufactured by resin molding, and an end of the connector terminal 29a is positioned at an external connector connection part 30 that is provided on an outer side surface of the board cover 22 by integral molding (see Fig. 1). A not-shown external connector is fitted to the external connector connection part 30, so that power supply voltage and driving pulses can be supplied to the circuit board 4 from an external part via the external connector connection part 30, the cover-side connector 29, and the board-side connector 28.

Next, the procedure for assembling the motor cover 21 and the board cover 22 in such a structure will be described with reference to Fig. 1 and Fig. 5.

First, it is assumed that the circumferential assembly positions of the motor cover 21 and the board cover 22 are determined in advance, and for example, marks are put on appropriate positions in peripheral edges thereof Here, by aligning the pre-set assembly positions, the board-side connector 28 and the cover-side connector 29 are directly fitted to each other when the motor cover 21 and the board cover 22 are fitted to each other.

It is also premised that the stator 2, the rotor 3, and so on have been attached on the motor cover 21, and the circuit board 4, which is connected to the exciting coil 7 via the 24, has been attached to the motor cover 21, and further, an O-ring 23 has been fitted around the motor cover 21.

Under such premises, the predetermined positions of the motor cover 21 and the board cover 22 are aligned with each other so that they are in a proper circumferential relative position, and subsequently, the first ring-shaped peripheral wall 21b of the motor cover 21 is gradually pushed into the board cover 22. In accordance with the insertion of the motor cover 21 into the board cover 22, the board-side connector 28 and the cover-side connector 29 start to be fitted to each other, and when a top of the peripheral wall 41 of the cover-side connector 29 abuts on a bottom of a insertion groove 28c of the board-side connector 28, the fitting of the motor cover 21 and the board cover 22 and the fitting of the board-side connector 28 and the cover-side connector 29 are completed (see Fig.1 and Fig. 5).

Then, by fitting the not-shown external connector to the external connector connection part 30, it is possible to supply power supply voltage and driving signals from the external part.

### Industrial Applicability coil

A waterproof structure for a terminal electrically connecting an exciting coil and a circuit board is provided and is applicable to a place requiring waterproofing, for example, to a brushless motor for driving a blower of a vehicle airconditioner.

## Claims

1. A brushless motor comprising a casing (1) that houses and holds a circuit board (4) and supports a rotor (3) in a rotatable manner,
wherein a stator (2) around which an exciting coil (7) is wound is disposed inside the rotor (3), and the exciting coil (7) is connected to the circuit board (4) via a terminal bar (24) provided in the casing (1), the brushless motor further comprising
a waterproof case (25) having a portion in a hollow form, and
wherein one end of the terminal bar (24) connected to the exciting coil (7) is positioned in the portion in the hollow form of said waterproof case (25), while the other end of the terminal bar protrudes from said waterproof case (25), and an adhesive is filled in a hollow portion of the portion in the hollow form so as to bury the terminal bar (24), and
wherein said waterproof case (25) is disposed on an upper surface side of said casing (1), with the portion in the hollow form facing the rotor (3),
**characterized in**
**that** said waterproof case (25) has a substantially columnar, cylindrical outer shape as a whole, and is composed of a first, large-diameter portion in a hollow form (25a) and a second, small-diameter portion (25b) which extends from the first portion and in which a portion extending from the end of the terminal bar (24) connected to the exciting coil (7) is buried by insert molding, and
**that** said casing (1) has a cylindrical portion (26) which protrudes toward an inner side of the casing (1) and in which the second portion of the waterproof case (25) is fittingly inserted, and
**that** an O-ring is fitted around an outer peripheral surface of the second portion, and
**that** said large-diameter portion (25a) is in a hollow bottomed-cylindrical shape, and
**that** an U-shaped end of the terminal bar (24) fs positioned in the large-diameter portion (25a), a substantially linear portion extending from the U-shaped end of the terminal bar (24) is partly buried in an axial direction in the small-diameter portion (25b),
and **that** the other portion of the terminal bar (24) protrudes from the small-diameter portion (25b), and
**that** said hollow cylindical fitting portion (26) is formed at an appropriate position of a motor cover base portion (21a) of a motor cover (21) to protrudes toward a rear surface side of the motor cover (21), and

## Patentansprüche

1. Bürstenloser Motor, der ein Gehäuse (1) aufweist, das eine Platine (4) aufnimmt und hält sowie einen Rotor (3) in einer drehbaren Weise abstützt,
wobei sich ein Stator (2), um den eine Erregerspule (7) gewickelt ist, im Inneren des Rotors (3) befindet, wobei die Erregerspule (7) mit der Platine (4) über eine im Gehäuse (1) vorgesehene Anschlussschiene (24) verbunden ist, und wobei der bürstenlose Motor weiterhin Folgendes aufweist:
eine wasserdichte Umhüllung (25) mit einem Abschnitt in Hohlform,
wobei ein Ende der mit der Erregerspule (7) verbundenen Anschlussschiene (24) im Abschnitt in Hohlform der wasserdichten Umhüllung (25) positioniert ist, während das andere Ende der Anschlussschiene aus der wasserdichten Umhüllung (25) vorsteht, wobei ein hohler Abschnitt des Abschnitts in Hohlform mit einem Haftmittel verfüllt ist, um die Anschlussschiene (24) zu vergießen, und
wobei sich die wasserdichte Umhüllung (25) an einer oberen Fläche des Gehäuses (1) befindet und der hohlförmige Abschnitt dem Rotor (3) zugewandt ist,
**dadurch gekennzeichnet,**
**dass** die wasserdichte Umhüllung (25) insgesamt eine im Wesentlichen säulenartige zylindrische Außenform aufweist und aus einem ersten, einen großen Durchmesser aufweisenden Abschnitt (25a) und einem zweiten, einen kleinen Durchmesser aufweisenden Abschnitt in Hohlform (25b) gebildet ist, der sich vom ersten Abschnitt aus erstreckt, und wobei ein Abschnitt, der sich vom Ende der mit der Erregerspule (7) verbundenen Anschlussschiene (24) aus erstreckt, durch Umspritzen vergossen ist, und
**dass** das Gehäuse (1) einen zylindrischen Abschnitt (26) hat, der hin zu einer inneren Seite des Gehäuses (1) vorsteht, und wobei der zweite Abschnitt der wasserdichten Umhüllung (25) passend eingesetzt ist, und
**dass** ein O-Ring um eine äußere Umfangsfläche des zweiten Abschnitts herum eingepasst ist, und
**dass** der den großen Durchmesser aufweisende Abschnitt (25a) eine hohlzylindrische Form mit Boden aufweist, und
**dass** ein U-förmiges Ende der Anschlussschiene (24) in dem den großen Durchmesser aufweisenden Abschnitt (25a) positioniert ist, wobei ein im Wesentlichen linearer Abschnitt, der sich vom U-förmigen Ende der Anschlussschiene (24) aus erstreckt, in dem den kleinen Durchmesser aufweisenden Abschnitt (25b) in einer axialen Richtung teilweise vergossen ist, und
**dass** der andere Abschnitt der Anschlussschlene (24) aus dem den kleinen Durchmesser aufweisenden Abschnitt (25b) vorsteht, und
**dass** der hohle zylindrische Passabschnitt (26) in einer geeigneten Position an einem Motorabdeckungsbasisabschnitt (21 a) einer Motorabdeckung (21) so ausgebildet ist, dass er hin zu einer Rückseitenfläche der Motorabdeckung (21) vorsteht.

## Revendications

1. Moteur électrique sans balai comprenant un boîtier (1) qui loge et contient une carte de circuit imprimé (4) et soutient de manière rotative un rotor (3),
dans lequel un stator (2), autour duquel est enroulée une bobine d'excitation (7), est disposé à l'intérieur du rotor (3) et la bobine d'excitation (7) est raccordée à la carte de circuit imprimé (4) via une barrette à bornes (24) installée dans le boîtier (1),
le moteur électrique sans balai comprenant en outre un étui étanche (25) comportant une partie de forme creuse, et
dans lequel une extrémité de la barrette à bornes (24) raccordée à la bobine d'excitation (7) est placée dans la partie de forme creuse dudit étui étanche (25), tandis que l'autre extrémité de la barrette à bornes dépasse dudit étui étanche (25), et on remplit avec un adhésif un creux de la partie de forme creuse de façon à noyer la barrette à bornes (24), et
dans lequel ledit étui étanche (25) est disposé sur le côté de surface supérieure dudit boîtier (1), avec la partie de forme creuse tournée vers le rotor (3),
**caractérisé en ce:**
**que** ledit étui étanche (25) a une forme extérieure qui dans son ensemble est sensiblement en forme de colonne cylindrique et est composé d'une première partie (25a) de grand diamètre et de forme creuse et d'une seconde partie (25b) de petit diamètre qui s'étend à partir de la première partie et dans laquelle une partie s'étendant depuis l'extrémité de la barrette à bornes (24) raccordée à la bobine d'excitation (7) est noyée par moulage sur prisonnier, et
**que** ledit boîtier (1) comporte une partie cylindrique (26) qui fait saillie vers le côté intérieur du boîtier (1) et dans laquelle est convenablement insérée la seconde partie de l'étui étanche (25), et
un joint torique est installé autour de la surface périphérique extérieure de ladite seconde partie, et
**que** ladite partie (25a) de grand diamètre a une forme creuse à fond cylindrique, et
**que** une extrémité en « U » de la barrette à bornes (24) est placée dans la partie (25a) de grand diamètre et une partie sensiblement linéaire, qui s'étend depuis l'extrémité en « U » de la barrette à bornes (24), est en partie noyée dans le sens axial dans la partie (25b) de petit diamètre, et
**que** l'autre partie de la barrette à bornes (24) saille de la partie (25b) de petit diamètre, et
**que** ladite partie d'insertion (26) creuse cylindrique est configurée au niveau d'un emplacement approprié d'une partie de base (21a) d'un couvercle (21) de moteur pour faire saillie vers le côté de surface arrière du couvercle (21) de moteur.
